Europäisches Patentamt

European Patent Office

Office européen des brevets

(11) Publication number: 0 326 199
A2

## EUROPEAN PATENT APPLICATION

(21) Application number: 89200063.9

(22) Date of filing: 12.01.89

(51) Int. Cl.⁴: G01D 5/26

(30) Priority: 29.01.88 GB 8801999

(43) Date of publication of application:
02.08.89 Bulletin 89/31

(84) Designated Contracting States:
DE ES FR IT NL SE

(71) Applicant: PLESSEY OVERSEAS LIMITED
Vicarage Lane
Ilford Essex IGI 4AQ(GB)

(72) Inventor: Lamb, Christopher
3 St Anns Court Queen Street
Gillingham Dorset(GB)

(74) Representative: Sorenti, Gino
Intellectual Property Department The
Plessey Company plc 2-60 Vicarage Lane
Ilford Essex IG1 4AQ(GB)

(54) An optical sensing apparatus.

(57) Optical sensing apparatus wherein single, mono-frequency, pulse are injected into an array of optical sensor elements (7) interactive with its environment. The array of optical sensor elements (7) being arranged to have partially reflective splices between the sensors (6) and thus providing a returned reflected pulse train. The apparatus including processing means (11) arranged to process the return pulse train to provide array environmental information.

FIG. 1.

# AN OPTICAL SENSING APPARATUS

The present invention relates to an optical sensing apparatus and more particularly, but not exclusively, to such an apparatus incorporating hydrophone arrays.

Optical sensing apparatus having hydrophone arrays or other physical parameter varying sensor elements are known for monitoring environmental changes. An example of such apparatus is given in United Kingdom Patent Application No. 8424670. Typically, a high coherence light source of highly defined frequency is switched to provide an injection pulse pair of assured respectively time spaced and frequency displaced pulses. A heterodyne signal is produced by superimposition of portions of these pulses reflected by partially reflecting discontinuities between the arrays or elements. These heterodyne signals are indicative of the environmental condition of the elements.

A high coherence source is necessary in order that a high degree of input frequency stability and accuracy can be assured. Thus, any frequency or phase shift deduced in the resultant heterodyne can be more certainly attributed to changes in the arrays or sensor elements.

To provide such a high coherence light source has previously proved quite difficult due to there being a necessity to compromise between source power and desired high frequency tolerance for high coherence. Furthermore, it is inherent with light sources, such as lasers, that phase changes occur if the source is exposed to mechanical interference i.e. soundwaves. If such a phase change occured in the time between generation of each pulse of the injection pair then a phase shift would occur in the resultant heterodyne that is not attributable to environmental changes in the arrays or sensor elements.

A laser arrangement that can be used, however, has been disclosed in United Kingdom Patent No. 2129957B. This arrangement switches the light source with a Bragg cell and a delay element thus reducing the absolute level of coherence required. An inherent problem with this relatively low coherence laser arrangement is that there is a loss in the light signal launch power into the array due to the signal switching and delay element technique required to provide heterodyne signals.

Additionally, phase shifts other than caused by sensor elements may occur in the connection link between Bragg cell/delay element and the sensor elements.

These losses are particularly limiting with hydrophone arrays where a succession of sensor elements are arranged in series with partially reflecting mirrors or discontinuities at there interfaces. It will thus be appreciated that the greater the launch power of the source signal the longer the hydrophone array that can be accommodated.

A further problem with prior arrangements is that provision of the injection pulse pair and reflection at the partially reflecting discontinuity induces a displacement in respective pulse polarisations. This displacement in pulse polarisation introduces a reflected pulse interaction mis-alignment reducing the power of the heterodyne.

It is an objective of the present invention to provide an optical sensing system in which the above problems are substantially limited. Furthermore, the present invention allows for better noise rejection in the connection to the sensor array and allows for better control of the sensor array reflected signal polarisation state.

According to the present invention there is provided an optical sensing apparatus for transmitting optical signals to and for receiving optical signals from an optical sensor array, the apparatus including a light source optically coupled to a switching element for providing single light pulses to the sensing element array, means being provided for dividing a returned reflected pulse train from the array between at least two detector paths, one of the detection paths being provided with a delay element and the detector paths being connected for combining the portions of the reflected pulse train processing means.

Embodiments of the present invention will now be described by way of example only with reference to the Figures in the accompanying drawing in which:-

Figure 1 illustrates an optical sensing apparatus according to an embodiment of the present invention;

Figure 2 shows the returned pulse train for the apparatus as illustrated in Figure 1;

Figure 3 illustrates an alternative signal processing arrangement compared to that illustrated in Figure 1, and,

Figure 4 illustrates a further adaptation of the apparatus as illustrated in Figure 1.

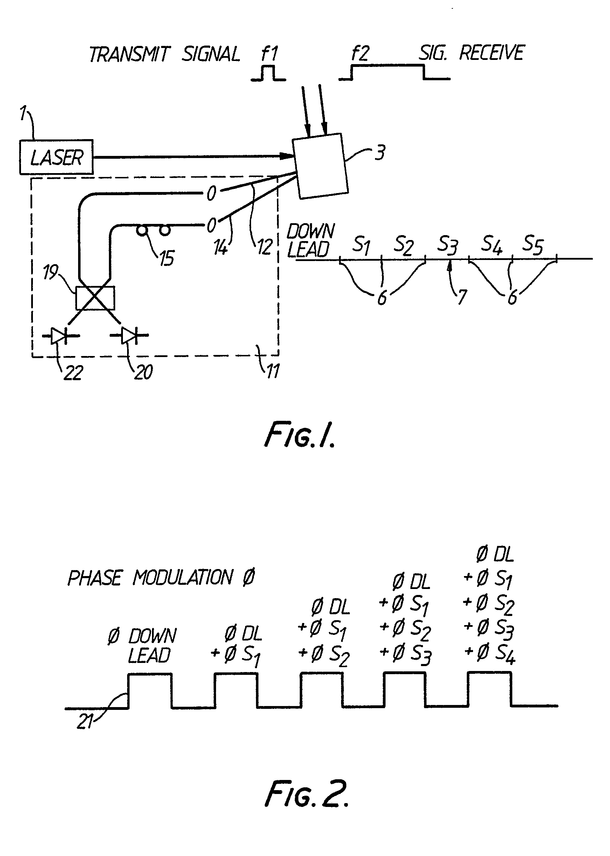

Figure 1 illustrates an optical sensing apparatus according to an embodiment of the present invention, the apparatus comprising a light source in the form of a laser 1 for transmitting light to a switching element 3. The switching element 3 operates, through a transmit signal F1, to provide a light pulse which is launched or injected into an array 7. The array 7 consists of a series of sensors (S₁₋₅) arranged with partially reflective splices 6 therebetween. The sensors (S₁₋₅) are environmentally interactive, i.e. changes in temperature, pressure etc. may alter the length of the sensors, consequently reflected signals from the partially reflective splices are indicative of these environmental changes.

In prior optical sensing arrangements it is common for the switching element 3 to inject two light pulses of slightly different frequencies. These two light pulses are caused to overlap on returning to a detector photodiode thus producing a heterodyne. In the present invention single mono-frequency pulses are injected into the array 7 by switching the switching element 3 with a first switching pulse $F_1$. A proportion of each single pulse is reflected from the partially reflecting splices and a pulse train 21 (as illustrated in Figure 2) is returned to the switching element 3.

Each pulse of the returning pulse train is modified by phase modulation consistent with its passage down the array 7 Phase modulation $\phi_{S1-S5}$ and $\phi_{DL}$ is accumulative as the pulses pass through respective sensors $S_1$-$S_5$ i.e. $\phi_{S1}$ is the phase modulation attributable to sensor S1 while $\phi_{DL}$ is the phase modulation of the "dead length between the switching element 3 and the first partially reflective splice 6". The degree of phase modulation being dependent upon environmental effects upon the array 7. There may be relatively minor changes in each sensor due to changes in physical parameters, such as environmental temperature or stress. These changes are manifest in the return pulse train 21.

The returning pulse train 21 may be processed by several methods in order to obtain the necessary phase information and consequently changes in the physical parameters.

A first, simple, processing method is illustrated in Figure 1 by the provision of a returned signal section 11.

In the first processing method a second switching pulse $F_2$ is applied to the switching element 3 as the return pulse train 21 passes through it. The switching element 3 is arranged such that a proportion, usually half, of the energy from the pulses is diverted into respective fibre paths (12, 14). A delay element 15 being placed in path 14, in order that there is a delay bias between the paths (12, 14). The time delay of the delay element is typically equivalent to a sensor length "round trip" transit time i.e. to the partially reflective discontinuity and back. When the switching element 3 is a Bragg cell a frequency shift will also be imposed on the delayed pulses. The delayed and undelayed pulses from respective fibre paths (12, 14) are recombined, typically in a 3dB coupler 19, to provide heterodynes detectable by a photo-detector comprising a pair of photo diodes 19, 20. It will be appreciated, that by common moding or mutual cancellation of phase modulation results, unique interrogation of each sensor is possible in the array 7.

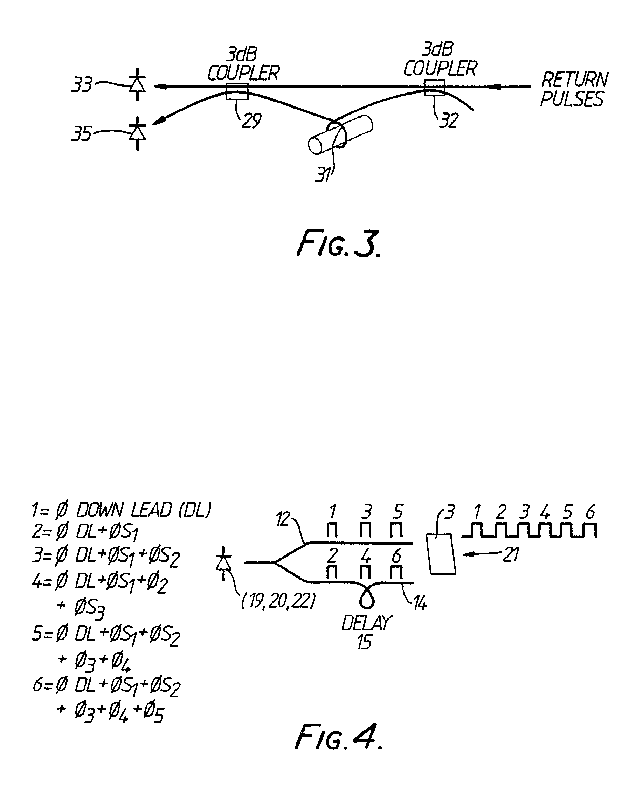

In a second processing method (illustrated in Figure 3), in which the switching element 3 is not a Bragg cell, returned pulses may be split using a 3dB coupler 32 and the frequency shift being achieved by an alternative method i.e. a Piezoelectric frequency shifter or integrated optic frequency shifter 31. However, a frequency shifter need not be incorporated resulting in a homodyne multiplexed array. In the homodyne case, using a piezoelectric fibre structure for example, a feedback loop may be used to maintain quaderature. Control of each reflected pulse polarisation can also be conducted after division of the reflected pulse in order that interaction to product the heterodyne or homodyne is maximised. A piezoelectric fibre structure would allow such mutual polarisation of pulses. The frequency shifter and delay coil 31 acting upon the delayed pulse to provide similar heterodyne signals are detectable by a pair of photo-detectors (33, 35) coupled to the ends of respective undelayed and delayed fibre paths.

It will be appreciated that the present invention is not limited by injection problems from the Bragg Cell into the sensor array precipitated by the angle of exit from the Bragg Cell being a function of frequency. Consequently, the divided pulses taken from the reflected pulse incident upon the Bragg cell can be of a much broader frequency differential i.e. in a Bragg cell refractive index is dependent upon frequency. The degree of sensitivity resolution inherent in the system of the present invention is thus substantially increased.

The above processing methods may be further modified by adapting the switching element such that only alternate pulses are switched and delayed. It will thus be appreciated that alternate sensors may be specifically addressed. In Figure 4 a symbolic diagram of the modification to the first processing method is illustrated. The pulse train 21 is switched by element 3 into paths (12, 14) alternately, path 14 induces a delay 15 and the signals in each path (12, 14) fed to the detector (19, 20, 22).

It will be noted that the light source may be a laser, and the array of sensors may be a series of hydrophones.

Although the present invention has been illustrated by reference to optical fibre sensors and a Bragg cell switching element it will be appreciated that the present invention is equally applicable to other devices and structures.

## Claims

1. An optical sensing apparatus for transmitting optical signals to and for receiving optical signals from a sensor element array (7), incorporating a plurality of sensing elements (6), the apparatus comprising a light source(1), a switching element (3) and processing means (11), the switching element (3) being arranged to transmit optical signals form the light source (1) into the sensor element array (7) whilst a returned pulse train from partially reflected discontinuities in the sensor element array (7) is coupled to the processing means (11) characterised, in operation, that single light pulses are transmitted into the sensor element array (7) and divider means is coupled to the switching element 3 for dividing the returned reflected pulse train into at least two detector paths (12, 14), one of the detector paths being provided with a delay element (15) and the detector paths (12, 14) being connected for combining their respective reflected pulse train portions upon the processing means (11).

2. An optical sensing apparatus as claimed in claim 1 further characterised in that the switching element (3) is a Bragg cell and the single pulses are provided by switching that cell with a transmit signal of a required pulse length.

3. An optical sensing apparatus as claimed in claim 1 further characterised in that the processing means (11) is arranged such that the returned pulses train from the partially reflective discontinuities is split by a first coupler element into two respective detector paths with a delay bias (15) therebetween, the delay bias being equivalent to an integral multiple of the single pulse transit time in a sensor element between injection and return, the processing means having a second coupler element arranged to combine the signals transmitted through the respective detector paths to provide a heterodyne, the heterodyne being fed to a detector (19).

4. An optical sensing apparatus as claimed in claims 1 or 3 further characterised in that one of the detector paths (12, 14) has a frequency shifter incorporated into it.

5. An optical sensing apparatus as claimed in claim 1 further characterised in that a frequency shift feedback loop is provided upon one detector path (12, 14) to induce quadrature between the pulses in respective detector paths (12, 14).

6. An optical sensing apparatus as claimed in any preceding claim further characterised in that only selected returned signals are switched into the processing means (1) whereby specific sensor elements (6) may be determined.

7. An optical sensing apparatus as claimed in any preceding claim further characterised in that the sensor elements (6) are lengths of optical fibre.

8. An optical sensing apparatus as claimed in any preceding claim wherein the light source (1) is a laser.

9. Optical sensing apparatus as claimed in claim 3 and any dependent claim thereon further characterised in that the first and second coupler elements are 3dB couplers.

10 Optical sensing apparatus as claimed in any preceding claim further characterised in that a piezoelectric fibre structure is provided upon one of the detector paths (12, 14) whereby the portion of the reflected pulse train in that detector path (12, 14) can be adjusted to provide mutual polarisation with the portion of the reflected pulse train in the other detector path (12, 14).

TRANSMIT SIGNAL   f1        f2        SIG. RECEIVE

1

LASER

0

0

15          14   12   DOWN
                      LEAD   $S_1$   $S_2$   $S_3$   $S_4$   $S_5$

19                                    6              7         6

22    20        11

## FIG.1.

PHASE MODULATION Ø

                                                              Ø DL
                                                              + Ø $S_1$
                                              Ø DL            + Ø $S_2$
                              Ø DL            + Ø $S_1$       + Ø $S_3$
              Ø DL            + Ø $S_1$       + Ø $S_2$       + Ø $S_4$
Ø DOWN        + Ø $S_1$       + Ø $S_2$       + Ø $S_3$       + Ø $S_4$
LEAD

21

## FIG.2.

*Fig.3.*

$1 = \varnothing$ DOWN LEAD (DL)
$2 = \varnothing$ DL$+\varnothing S_1$
$3 = \varnothing$ DL$+\varnothing S_1+\varnothing S_2$
$4 = \varnothing$ DL$+\varnothing S_1+\varnothing_2$
$\quad + \varnothing S_3$
$5 = \varnothing$ DL$+\varnothing S_1+\varnothing S_2$
$\quad + \varnothing_3+\varnothing_4$
$6 = \varnothing$ DL$+\varnothing S_1+\varnothing S_2$
$\quad + \varnothing_3+\varnothing_4+\varnothing_5$

*Fig.4.*